# EUROPEAN PATENT APPLICATION

(11) **EP 4 607 662 A1**
(43) Date of publication of application: **27.08.2025**
(21) Application number: 24883595.1
(22) Date of filing: 30.09.2024
(51) Int. Cl.: H01M 50/167, G01B 7/00, H01M 10/04

(54) **CRIMPING APPARATUS FOR CYLINDRICAL BATTERY, HAVING POSITION MEASUREMENT PART FOR CRIMP-PRESSING PART**

(30) Priority: 12.12.2023 KR 20230180135
(71) Applicant: LG Energy Solution, Ltd., Seoul 07335 (KR)
(72) Inventor: KIM, Seong Kyu, Daejeon 34122 (KR)
(74) Representative: Goddar, Heinz J.
(86) International application number: PCT/KR2024/014888
(87) International publication number: WO 2025/127344

(57) **Abstract**

Disclosed is a crimping apparatus for cylindrical batteries with a crimping pressing portion position measurement unit, and more particularly a crimping apparatus for cylindrical batteries, the crimping apparatus including an upper body including a crimping pressing portion and a cam on which the upper body is disposed in plural in a circular shape, the cam being configured to rotate together with the upper bodies, wherein the crimping apparatus includes a position measurement sensor configured to measure the height of the crimping pressing portion.

## Description

### [Technical Field]

This application claims the benefit of priority to Korean Patent Application No. 2023-0180135 filed on December 12, 2023, the disclosure of which is incorporated herein by reference in its entirety.

The present invention relates to a crimping apparatus for cylindrical batteries with a crimping pressing portion position measurement unit. More particularly, the present invention relates to a crimping apparatus for cylindrical batteries including a crimping pressing portion position measurement unit capable of reducing or preventing the occurrence of crimping defects by measuring the position of a crimping pressing portion in a process of manufacturing a cylindrical battery cell.

### [Background Art]

Depending on the shape of a battery case, secondary batteries are classified into a cylindrical battery having an electrode assembly received in a cylindrical metal can, a prismatic battery having an electrode assembly received in a prismatic metal can, and a pouch-shaped battery having an electrode assembly received in a pouch-shaped case made of an aluminum laminate sheet.

As secondary batteries are used for various purposes and a large amount of energy is required, it is necessary to increase energy density, and to this end, in the case of a cylindrical battery cell, the volume of the cylindrical battery cell is reduced by pressing a can of the cylindrical battery cell to improve energy density.

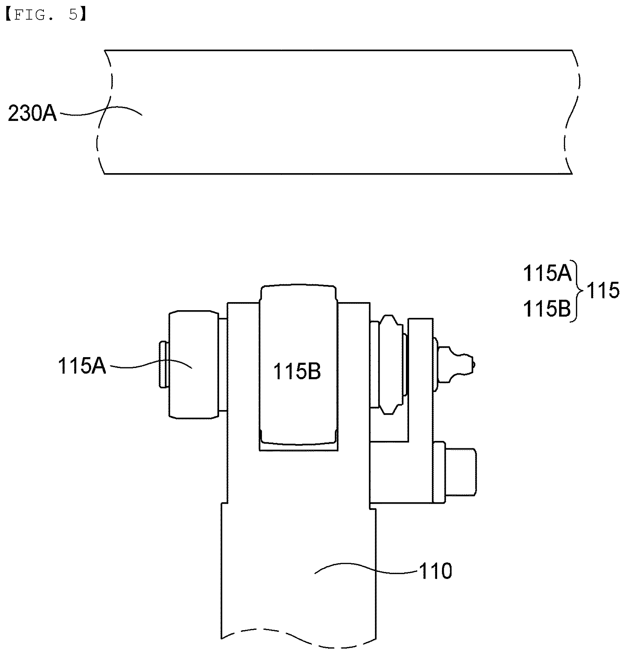

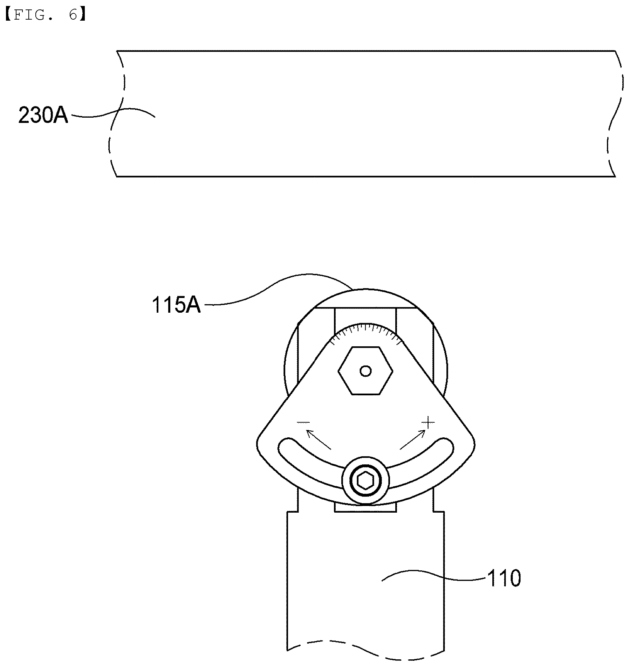

FIG. 5 is a side view showing a part of a conventional crimping apparatus for cylindrical batteries, and FIG. 6 is a front view showing the part of the conventional crimping apparatus for cylindrical batteries. Particularly, in the conventional crimping apparatus for cylindrical batteries, no separate position measurement means configured to measure the position of a crimping pressing portion is provided, which will be described with reference to FIGs. 5 and 6.

As shown in FIGs. 5 and 6, the crimping apparatus for cylindrical batteries includes a crimping pressing portion 110 configured to press a cylindrical battery and a cam plate 230A located above the crimping pressing portion 110, wherein the crimping pressing portion 110 includes a roller 115 having a moving roller 115A and a pressing roller 115B.

In the conventional crimping apparatus for cylindrical batteries, the crimping pressing portion 110, which presses the cylindrical battery, performs crimping simply by movement of the moving roller 115A and pressing of the pressing roller 115B. Since there is no separate means configured to check the position where crimping is performed, crimping defects occur due to the position error of the crimping pressing portion 110, which is not correctly determined, whereby the problem cannot be solved.

Patent Document 1 discloses an apparatus for manufacturing a cylindrical battery by caulking an outer circumference of an upper end of a cylindrical battery case, wherein a member configured to measure the position of a pressing portion when the cylindrical battery case is pressed in a vertical direction is not provided.

Patent Documents 2 to 4 also do not disclose a configuration corresponding to a measurement member configured to measure the position of a crimping pressing portion.

In a process of manufacturing a cylindrical battery, respective steps are automatically performed sequentially by a cam-type rotating process, and if a defect occurs in a specific sequence, the defect rate may be greatly reduced by preemptively responding to the same. In a crimping process, the crimping pressing portion is moved downward by the pressure applied thereto by the pressing roller 115B, whereby crimping is performed. Since the cylindrical battery is fixed by a battery cell fixing unit before crimping and crimping is performed as the crimping pressing portion is moved downward, it is possible to easily determine whether the entire crimping process is defective by checking the final downward position of the crimping pressing portion. Despite this, the prior art documents merely continue to operate the mechanical manufacturing apparatus and do not recognize the measurement or improvement related thereto.

### (Prior Art Documents)

U.S. Registered Patent Publication No. 5772704 ("Patent Document 1")
Korean Utility Model Application Publication No. 2012-0004056 ("Patent Document 2")
Korean Utility Model Publication No. 0485904 ("Patent Document 3")
Korean Registered Patent Publication No. 1075879 ("Patent Document 4")

### [Disclosure]

### [Technical Problem]

The present invention has been made in view of the above problems, and it is an object of the present invention to provide a crimping apparatus for cylindrical batteries including a crimping pressing portion position measurement unit capable of reducing or preventing the occurrence of crimping defects at a crimping pressing portion.

### [Technical Solution]

A crimping apparatus (10) for cylindrical batteries according to the present invention to accomplish the above object includes an upper body (100) including a crimping pressing portion (110) and a cam (200) on which the upper body (100) is disposed in plural in a circular shape, the cam being configured to rotate together with the upper bodies, wherein the crimping apparatus includes a position measurement sensor (300) configured to measure the height of the crimping pressing portion (110).

In the crimping apparatus for cylindrical batteries according to the present invention, the upper body (100) may include a battery cell fixing unit (120) disposed in the upper body (100), the battery cell fixing unit being configured to fix a cylindrical battery cell, and the crimping pressing portion (110) may be configured to move downward from above and to press the cylindrical battery cell such that a crimping portion is formed at the cylindrical battery cell after the cylindrical battery cell is fixed by the battery cell fixing unit (120).

In the crimping apparatus for cylindrical batteries according to the present invention, the battery cell fixing unit (120) may include a fixing jaw (125) configured to fix a beading portion of the cylindrical battery cell.

In the crimping apparatus for cylindrical batteries according to the present invention, a roller (115) may be disposed on the crimping pressing portion (110), and the position measurement sensor (300) may measure the position of the roller (115).

In the crimping apparatus for cylindrical batteries according to the present invention, a measurement dog (117) for position measurement is added to the central axis of the roller (115), and the position measurement sensor (300A) may measure the height of the measurement dog (117).

The crimping apparatus for cylindrical batteries according to the present invention may include a cam plate (230) located above the cam (200), the height of the cam plate being fixed, the cam plate including a through-hole (231), and a measurement unit (400) located through the through-hole (231), the position of the measurement unit being measured by the position measurement sensor (300B).

In the crimping apparatus for cylindrical batteries according to the present invention, the measurement unit (400) may include a tight contact portion (410) in tight contact with the roller (115) and an extension portion (420) having one side connected to the tight contact portion (410) and the other side extending upwardly of the cam plate (230) through the through-hole (231).

In the crimping apparatus for cylindrical batteries according to the present invention, the cam plate (230) may be provided at an upper surface thereof with a support shaft (500) configured to support the position measurement sensor (300B).

In the crimping apparatus for cylindrical batteries according to the present invention, the extension portion (420) may be provided at a side surface thereof with a movement guide portion (600) configured to guide the movement of the measurement unit (400).

In the crimping apparatus for cylindrical batteries according to the present invention, the position measurement sensor (300B) may be an eddy current sensor.

In the crimping apparatus for cylindrical batteries according to the present invention, the position measurement sensor (300B) may measure the distance (D) from the position measurement sensor (300B) to an upper surface of the extension portion (420).

The crimping apparatus for cylindrical batteries according to the present invention may include a support portion (700) fixed to the side surface of the extension portion (420), the support portion being configured to support the extension portion (420) such that the extension portion is prevented from falling downwardly of the cam plate (230).

In addition, the present invention may provide various combinations of the above solving means.

### [Advantageous Effects]

In the present invention, a measurement unit capable of measuring the position of a crimping pressing portion in a vertical direction is provided, whereby it is possible to reduce or prevent the occurrence of crimping defects at the crimping pressing portion. In addition, it is possible to determine defects or abnormality of each individual upper body and to easily repair or replace an abnormal part based thereon.

### [Description of Drawings]

FIG. 1 is a perspective view showing a crimping apparatus for cylindrical batteries according to a first embodiment of the present invention.
FIG. 2 is a perspective view showing a crimping apparatus for cylindrical batteries according to a second embodiment of the present invention.
FIG. 3 is a schematic view of a battery cell fixing unit according to the present invention.
FIG. 4 is a schematic view showing that a cylindrical battery cell is fixed using the battery cell fixing unit according to the present invention.
FIG. 5 is a side view showing a part of a conventional crimping apparatus for cylindrical batteries.
FIG. 6 is a front view showing the part of the conventional crimping apparatus for cylindrical batteries.
FIG. 7 is a side view of a position measurement unit according to a first embodiment of the present invention.
FIG. 8 is a side view showing the crimping apparatus for cylindrical batteries according to the second embodiment of the present invention.
FIG. 9 is a front view of the crimping apparatus for cylindrical batteries according to the second embodiment of the present invention.
FIG. 10 is a side view showing the state in which a measurement unit is moved downward by a predetermined distance in the crimping apparatus for cylindrical batteries according to the second embodiment of the present invention.
FIG. 11 is a side view showing the state in which the measurement unit is moved upward by a predetermined distance in the crimping apparatus for cylindrical batteries according to the second embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

The same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

A description to embody elements through limitation or addition may be applied to all inventions, unless particularly restricted, and does not limit a specific invention.

In the description of the invention and the claims of the present application, singular forms are intended to include plural forms unless mentioned otherwise.

In the description of the invention and the claims of the present application, "or" includes "and" unless mentioned otherwise. Therefore, "including A or B" means three cases, namely, the case including A, the case including B, and the case including A and B.

Hereinafter, a crimping apparatus for cylindrical batteries with a crimping pressing portion position measurement unit according to the present invention will be described in detail with reference to the accompanying drawings.

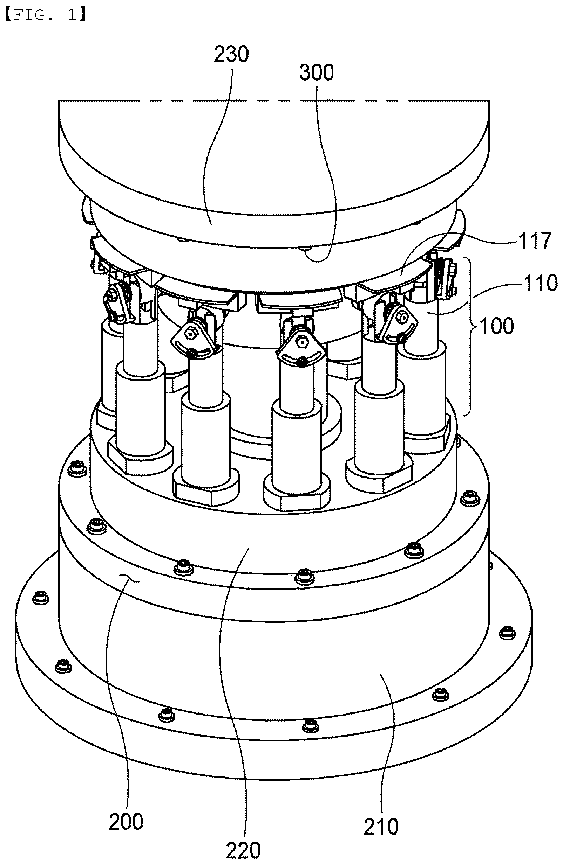

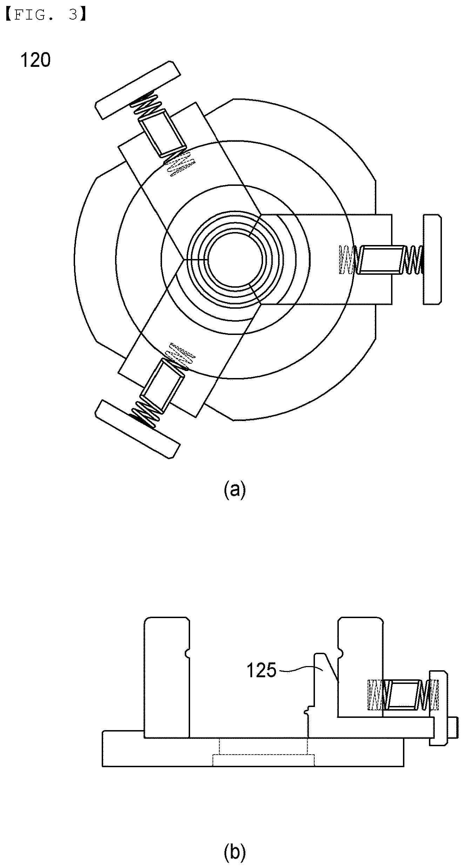

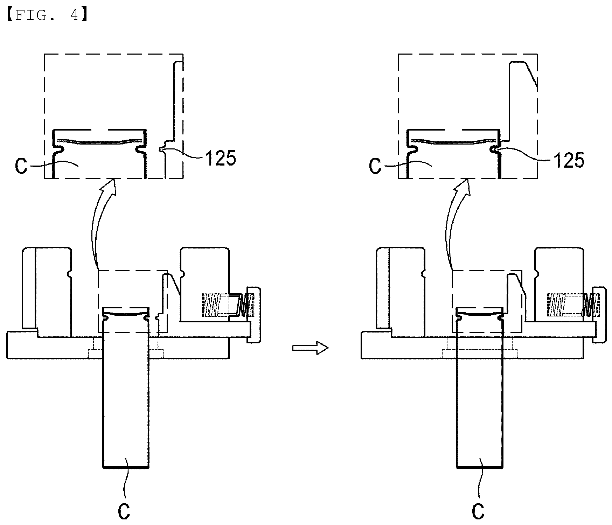

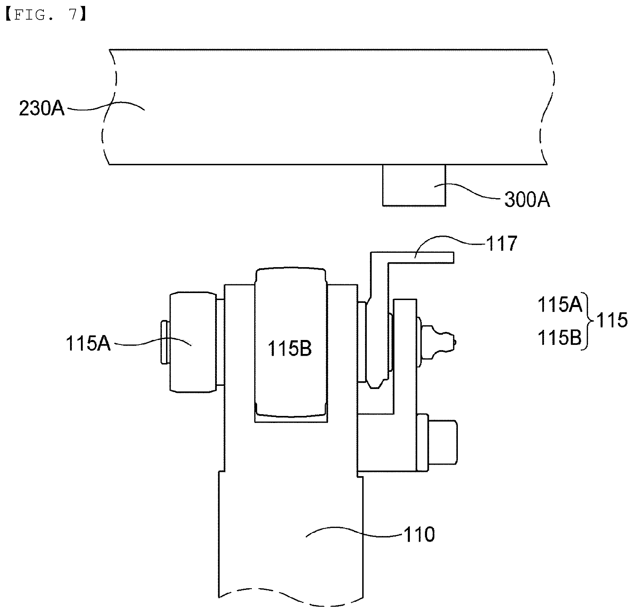

FIG. 1 is a perspective view showing a crimping apparatus for cylindrical batteries according to a first embodiment of the present invention, FIG. 3 is a schematic view of a battery cell fixing unit according to the present invention, FIG. 4 is a schematic view showing that a cylindrical battery cell is fixed using the battery cell fixing unit according to the present invention, and FIG. 7 is a side view of a position measurement unit according to a first embodiment of the present invention.

Referring now to FIGs. 1, 3, 4, and 7, the crimping apparatus 10 for cylindrical batteries according to the first embodiment of the present invention includes an upper body 100, a cam 200, and a position measurement sensor 300A.

The upper body 100 is configured to fix a cylindrical battery C and to subsequently crimp the cylindrical battery, and includes a crimping pressing portion 110 and a battery cell fixing unit 120.

The crimping pressing portion 110 is configured to press the cylindrical battery cell C to form a crimping portion. An electrode assembly is received in the cylindrical battery, a top cap assembly is mounted to the top of the cylindrical battery, and crimping is performed with a gasket added. The crimping pressing portion 110 may be a pressing member having a piston structure, and a roller 115 may be disposed on the crimping pressing portion 110.

The roller 115 includes a moving roller 115A connected to a cam 200 and a pressing roller 115B configured to press the crimping pressing portion 110, wherein the moving roller 115A and the pressing roller 115B are configured to have the same central axis.

A measurement dog 117, which may serve as a reference for position measurement, is added to one side of the central axis of the roller 115. The measurement dog 117 may have a structure in which a part to be measured is flat in a horizontal direction, which facilitates position measurement and improves accuracy. The measurement dog 117 may be added to the upper body 100 provided on the cam 200.

The battery cell fixing unit 120 is configured to fix the cylindrical battery cell prior to pressing the cylindrical battery cell, and includes a fixing jaw 125, as shown in FIGs. 3 and 4.

The fixing jaw 125 is directly in tight contact with the cylindrical battery cell to fix the cylindrical battery cell prior to pressing the cylindrical battery cell. The fixing jaw 125 has a protrusion formed so as to be inserted into a beading portion of the cylindrical battery cell. When the fixing jaw 125 is moved in a direction toward the cylindrical battery cell, the protrusion is inserted into the beading portion to fix the cylindrical battery cell.

The cylindrical battery C is fixed by the battery cell fixing unit 120, and is pressed by the crimping pressing portion 110, whereby a crimping portion is formed at the cylindrical battery.

The cylindrical battery cell C includes an electrode assembly, a cap assembly, and a cylindrical battery case configured to receive the electrode assembly and the cap assembly.

The electrode assembly is a jelly-roll type electrode assembly, which is configured to have a structure in which a long sheet type positive electrode and a long sheet type negative electrode are wound in the state in which a separator is interposed therebetween.

The positive electrode includes a positive electrode current collector and a positive electrode active material applied to each of an upper surface and a lower surface of the positive electrode current collector.

In general, the positive electrode current collector may have a thickness of 3 to 500 µm. The positive electrode current collector is not particularly restricted as long as the positive electrode current collector exhibits high conductivity while the positive electrode current collector does not induce any chemical change in a battery. For example, the positive electrode current collector may be made of stainless steel, aluminum, nickel, titanium, or sintered carbon. Alternatively, the positive electrode current collector may be made of aluminum or stainless steel, the surface of which is treated with carbon, nickel, titanium, or silver. In addition, the positive electrode current collector may have a micro-scale uneven pattern formed on the surface thereof so as to increase adhesion of the positive electrode active material, or may be configured in any of various forms, such as a film, a sheet, a foil, a net, a porous body, a foam body, and a non-woven fabric body.

A layered compound, such as lithium cobalt oxide (LiCoO₂) or lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; a lithium copper oxide (Li₂CuO₂); a vanadium oxide, such as LiV₃O₈, V₂O₅, or Cu₂V₂O₇; a Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a part of Li in the chemical formula is replaced by alkaline earth metal ions; a disulfide compound; Fe₂(MoO₄)₃, or LiNiₓMn₂₋ₓO₄ (0.01 ≤ x ≤ 0.6) may be used as the positive electrode active material.

Meanwhile, the positive electrode active material may be mixed with a conductive agent and a binder, and a filler may be further added as needed.

The conductive agent is generally added in an amount of 1 to 50 wt% based on the total weight of the mixture including the positive electrode active material. The conductive agent is not particularly restricted as long as the conductive agent exhibits high conductivity while the conductive agent does not induce any chemical change in a battery. For example, graphite, such as natural graphite or artificial graphite; carbon black, such as carbon black, acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as zinc oxide or potassium titanate; a conductive metal oxide, such as titanium oxide; or a conductive material, such as a polyphenylene derivative, may be used as the conductive agent.

The binder is a component assisting in binding between the positive electrode active material and the conductive agent and in binding with the current collector. The binder is generally added in an amount of 1 to 50 wt% based on the total weight of the mixture including the positive electrode active material. As examples of the binder, there may be used polyvinylidene fluoride, polyvinyl alcohol, carboxymethylcellulose (CMC), starch, hydroxypropylcellulose, regenerated cellulose, polyvinyl pyrrolidone, tetrafluoroethylene, polyethylene, polypropylene, ethylene-propylene-diene terpolymer (EPDM), sulfonated EPDM, styrene butadiene rubber, fluoro rubber, and various copolymers.

Meanwhile, a positive electrode tab, which is connected to an uncoated portion of the positive electrode and extends upward by a predetermined length, is electrically connected to the cap assembly.

The negative electrode includes a negative electrode current collector and a negative electrode active material applied to each of an upper surface and a lower surface of the negative electrode current collector.

The negative electrode current collector is generally manufactured so as to have a thickness of 3 to 500 µm. The negative electrode current collector is not particularly restricted as long as the negative electrode current collector exhibits high conductivity while the negative electrode current collector does not induce any chemical change in a battery. For example, the negative electrode current collector may be made of copper, stainless steel, aluminum, nickel, titanium, or sintered carbon. Alternatively, the negative electrode current collector may be made of copper or stainless steel, the surface of which is treated with carbon, nickel, titanium, or silver, or an aluminum-cadmium alloy.

In addition, the negative electrode current collector may have a micro-scale uneven pattern formed on the surface thereof in order to increase adhesion of the negative electrode active material, or may be configured in any of various forms, such as a film, a sheet, a foil, a net, a porous body, a foam body, and a non-woven fabric body.

As the negative electrode active material, for example, there may be used carbon, such as non-graphitizing carbon or graphite-based carbon; a metal composite oxide, such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8); lithium metal; a lithium alloy; a silicon-based alloy; a tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer, such as polyacetylene; a Li-Co-Ni-based material, or a Si-based material, such as Si, SiO, SiO₂, or a mixture thereof; however, the present invention is not limited thereto.

Of course, the negative electrode active material may be further mixed with a conductive agent and a binder, and the negative electrode current collector may be coated with the mixture.

The conductive agent is a component configured to further improve conductivity of the negative electrode active material, and carbon black, such as acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as zinc oxide or potassium titanate; a conductive metal oxide, such as titanium oxide; or a conductive material, such as a polyphenylene derivative, may be used in a certain proportion.

The binder is a component assisting in binding between the negative electrode active material and the conductive agent and in binding with the current collector, and may include at least one selected from the group consisting of styrene butadiene rubber (SBR), acrylonitrile butadiene rubber, acrylic rubber, butyl rubber, fluoro rubber, polyvinyl alcohol, carboxymethyl cellulose (CMC), starch, hydroxypropyl cellulose, regenerated cellulose, polyvinyl alcohol (PVA), polyacrylic acid (PAA), polyethylene glycol (PEG), polyacrylonitrile (PAN), and polyacrylamide (PAM).

Meanwhile, a negative electrode tab, which is connected to an uncoated portion of the negative electrode and extends downward by a predetermined length, is electrically connected to the cylindrical battery case, more specifically to a bottom surface.

The separator prevents short circuit between the positive electrode and the negative electrode and allows only migration of lithium ions. It is preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

An insulating member may be located on each of the top and the bottom of the electrode assembly received in the cylindrical battery case, and the insulating member serves to insulate between the electrode assembly and the cap assembly and between the electrode assembly and the cylindrical battery case.

The cap assembly is located on the top of the electrode assembly, is electrically connected to a positive electrode tab of the electrode assembly, and is coupled to an upper end of the cylindrical battery case, which is open, to seal the electrode assembly received in the cylindrical battery case.

Specifically, in the cap assembly, a current interrupting member, a current interrupting gasket, a safety vent, a PTC element, and a top cap are sequentially stacked from the bottom, and a crimping gasket is located at outer edges of the current interrupting member and the top cap.

The current interrupting member, which is also called a current interrupt device (CID), is located on the top of the electrode assembly, and the positive electrode tab is connected to a lower surface of the current interrupting member at a predetermined position. Although the current interrupting member is shown as being flat in the figures, a central part of the current interrupting member may be convex upward.

The safety vent, which is formed to protrude downward in the center and has one or more notches, is located on the top of the current interrupting member. The safety vent interrupts current and exhausts the gas in the event of an increase in pressure in the cylindrical battery case, and is disposed such that one surface of the safety vent is in contact with the PTC element and an edge surface of the safety vent is in contact with the crimping gasket.

The current interrupting gasket is located such that the current interrupting member and the safety vent remain electrically isolated from each other except for downwardly protruding portions of the current interrupting member and the safety vent.

The top cap located at the uppermost side seals the upper open end of the cylindrical battery case and forms a positive electrode terminal, and one or more venting holes are formed in the top cap, whereby, when venting gas is generated in the cylindrical battery case, the venting gas may be released to the outside to prevent explosion.

Generally, a crimping process and a beading process are performed on the cylindrical battery in order to fix the cap assembly.

The crimping gasket is provided on the edges, i.e., the outer circumferential surfaces, of the current interrupting member, the safety vent, the PTC element, and the top cap 250 in order to prevent deformation or breakage of these parts when the crimping process and the beading process are performed and to improve the tightness of the current interrupting member and the top cap.

Here, the material for the crimping gasket is not particularly limited as long as the material has predetermined elasticity and durability, and may be, for example, polybutylene terephthalate (PBT), polyphenylene sulfide (PPS), or perfluoroalkoxy (PFA).

The cylindrical battery case receives the electrode assembly and the cap assembly, and a negative electrode tab extends downward and is connected to the bottom of the cylindrical battery case such that the bottom of the cylindrical battery case can act as a negative electrode.

As described above, the crimping portion, which is configured to seal the cap assembly while wrapping around an outer side surface of the cap assembly, is provided at an upper end of the cylindrical battery case, and an inwardly indented beading portion is provided under the crimping portion to securely fix the electrode assembly and the cap assembly while protecting the electrode assembly and the cap assembly from external impact.

The cam 200 is donut-shaped, is rotatably driven, and rotates the upper body 100 connected thereto via the moving roller 115A to move the upper body 100 to the position where the steps of the manufacturing process are performed.

The manufacturing process performed by the upper body 100 that is moved to each position in accordance with the rotation of the cam 200 may be a process of receiving the cylindrical battery, a process of fixing the cylindrical battery, a process of crimping the cylindrical battery to form a crimping portion, and a process of discharging the cylindrical battery with the crimping portion formed.

The cam 200 is located on the top of the cam support portion 210, a central support portion 220 in the form of a column is provided at the center of the cam support portion 210, a cam plate 230A in the form of a disc is provided on an upper surface of the central support portion 220.

The central support portion 220 may be provided with a separate support rail (not shown) configured to allow the upper body 100 to move while being spaced apart from the central support portion 220 by a predetermined distance in a circumferential direction of the central support portion in a vertical state.

The position measurement sensor 300A is provided at a lower end of the cam plate 230A to measure the vertical position of the crimping pressing portion 110 in order to determine whether the crimping pressing portion 110 is abnormal. Specifically, the measurement dog 117 for position measurement is added to the central axis of the roller 115, and the position measurement sensor 300A measures the height of the measurement dog 117.

The position measurement sensor 300A may be an eddy current sensor configured to measure the distance between objects using eddy current, or a laser sensor configured to measure the distance by radiating a laser, and is not particularly limited as long as it is possible to measure the vertical position of the crimping pressing portion 110.

The position measurement sensor 300A measures the height of the crimping pressing portion 110 after the crimping portion is formed to determine whether the cylindrical battery cell C at which the crimping portion is formed is defective.

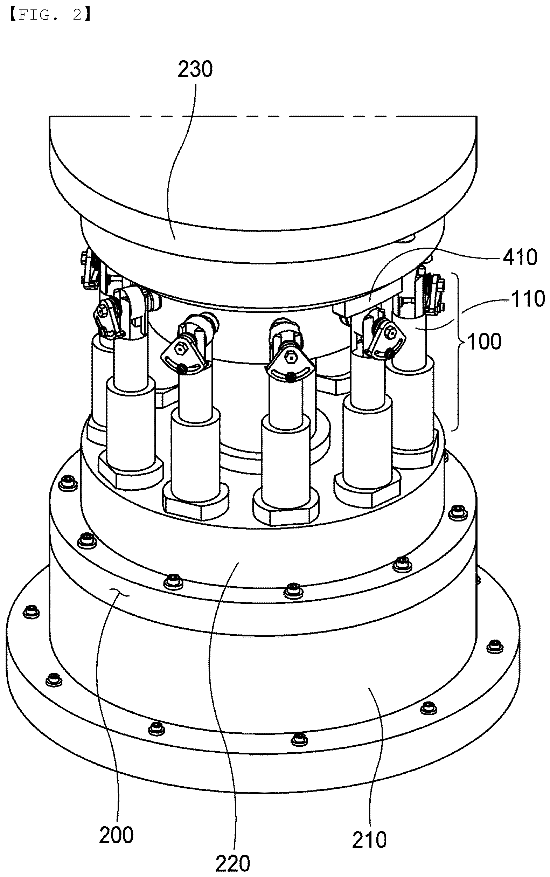

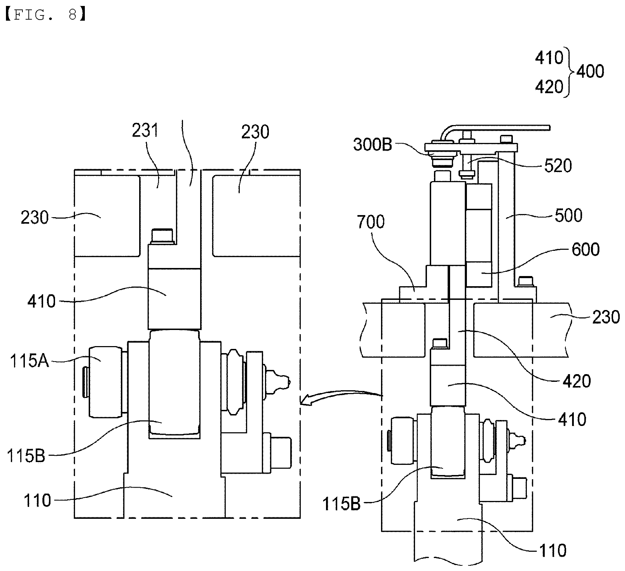

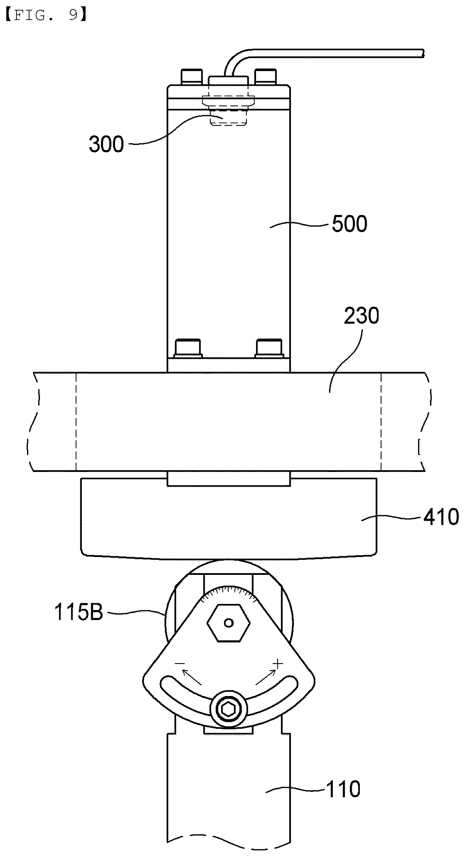

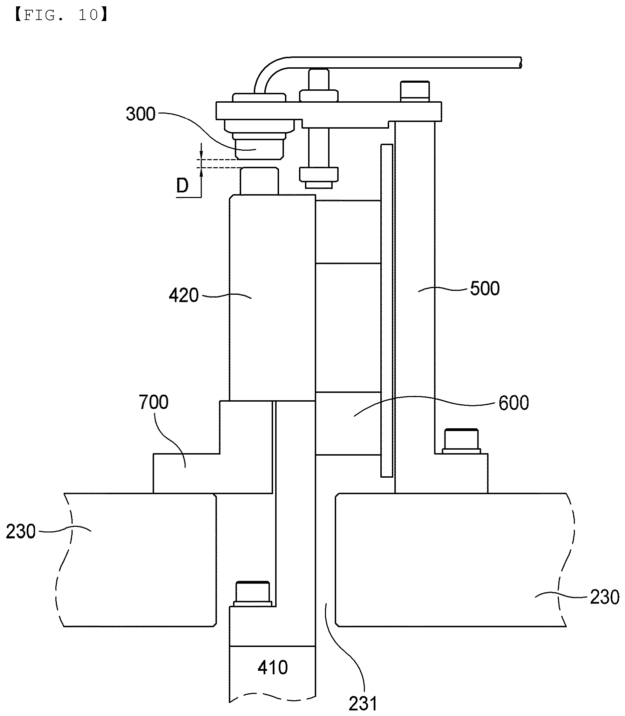

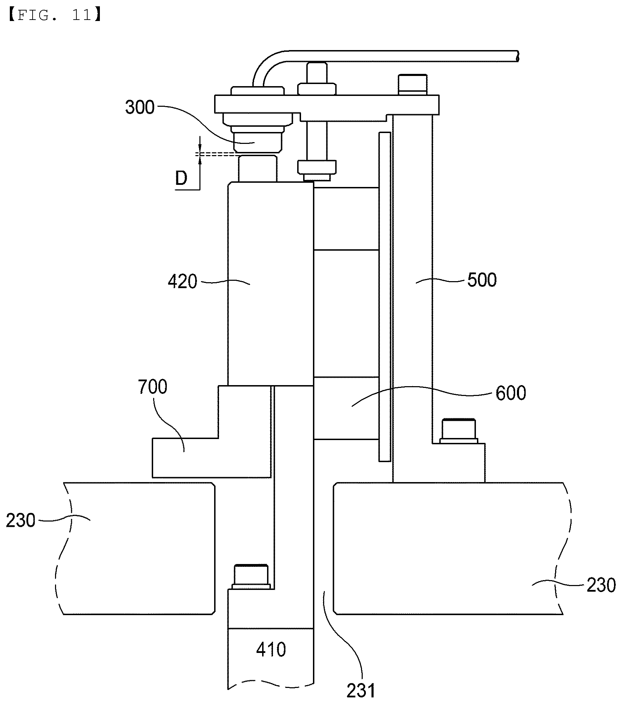

FIG. 2 is a perspective view showing a crimping apparatus for cylindrical batteries according to a second embodiment of the present invention, FIG. 3 is a schematic view of a battery cell fixing unit according to the present invention, FIG. 4 is a schematic view showing that a cylindrical battery cell is fixed using the battery cell fixing unit according to the present invention, FIG. 8 is a side view showing the crimping apparatus for cylindrical batteries according to the second embodiment of the present invention, FIG. 9 is a front view of the crimping apparatus for cylindrical batteries according to the second embodiment of the present invention, FIG. 10 is a side view showing the state in which a measurement unit is moved downward by a predetermined distance in the crimping apparatus for cylindrical batteries according to the second embodiment of the present invention, and FIG. 11 is a side view showing the state in which the measurement unit is moved upward by a predetermined distance in the crimping apparatus for cylindrical batteries according to the second embodiment of the present invention.

A description will be given with reference to FIGs. 1, 3, 4, and 8 to 11. The crimping apparatus for cylindrical batteries according to the second embodiment of the present invention includes an upper body 100, a cam 200, a position measurement sensor 300B, a measurement unit 400, a support shaft 500, a movement guide portion 600, and a support portion 700.

The upper body 100 and the cam 200 are the same as those of the crimping apparatus 10 for cylindrical batteries according to the first embodiment of the present invention, and therefore a description of the same configuration will be omitted. In the crimping apparatus for cylindrical batteries according to the second embodiment, no measurement dog 117 is provided, and the position of the position measurement sensor 300B is different. A cam plate 230 has a separate through-hole 231, unlike the cam plate 230A of the crimping apparatus for cylindrical batteries according to the first embodiment, and the measurement unit 400, the support shaft 500, the movement guide portion 600, and the support portion 700 are further included.

The cam plate 230 is in the form of a disc located on top of a central support portion 220, and the through-hole 231, through which the measurement unit 400 is located, is formed in the cam plate.

The position measurement sensor 300B, located as shown in FIG. 8, may measure the position of a crimping pressing portion 110 by measuring the distance D from the position measurement sensor 300B to an upper surface of an extension portion 420. The position measurement sensor 300B measures the height of the crimping pressing portion 110 after a crimping portion is formed to determine whether a cylindrical battery cell C at which the crimping portion is formed is defective.

The measurement unit 400 includes a tight contact portion 410 in tight contact with a roller 115 and an extension portion 420 connected to the tight contact portion 410 on one side and extending upwardly of the cam plate 230 through the through-hole 231 of the cam plate 230 on the other side.

The tight contact portion 410 may move upward and downward in tight contact with the roller 115 depending on the position of the roller 115, and the edge of a lower surface of the tight contact portion 410 is gently rounded, which prevents the tight contact portion from colliding with the roller 115 and being broken when the tight contact portion is in tight contact with the roller 115 moving in a horizontal direction.

A central part of the tight contact portion 410, except for the edge, is flat in the horizontal direction, which prevents an error in the position of the roller 115 depending on the part of the roller contacting the tight contact portion when the tight contact portion is in tight contact with the roller 115.

The size of the through-hole 231, specifically the sectional area of the through-hole, is formed so as to be greater than the sectional area of the tight contact portion 410 if the tight contact portion 410 is required to be inserted into the through-hole 231, and the sectional area of the through-hole 231 needs not be formed so as to be greater than the sectional area of the tight contact portion 410 if the tight contact portion 410 is not required to be inserted into the through-hole 231.

As an example, the sectional area of the through-hole 231 may be formed so as to be less than the sectional area of the tight contact portion 410 in order to prevent the tight contact portion 410 from moving upward higher than necessary and protruding upwardly of the cam plate 230 through the through-hole 231.

The extension portion 420 extends upwardly of the cam plate 230 through the through-hole 231 of the cam plate 230, and the position of the extension portion is measured by the position measurement sensor 300B located above the cam plate 230 so as to be spaced apart therefrom.

An incision portion having a predetermined area is formed in a side surface of a central part of the extension portion 420.

The support shaft 500 is configured to allow the position measurement sensor 300B to be located above the cam plate 230 so as to be spaced apart therefrom, wherein one side of the support shaft is connected to the cam plate 230 and extends in a vertical direction, and the other side of the support shaft is connected to the position measurement sensor 300B to fix the position measurement sensor 300B.

The movement guide portion 600 is a member located on the side surface of the extension portion 420 located upwardly of the cam plate 230 to guide the movement of the extension portion 420 in the vertical direction.

The movement guide portion 600 may be formed in the shape of a columnar rod and connected to the extension portion 420 such that the extension portion 420 moves along the rod, or may be formed in the shape of a rail and connected to the extension portion 420 such that the extension portion 420 moves along the rail.

The support portion 700 may have one side located so as to be fixed to an upper surface of the cam plate 230 and the other side extending in the horizontal direction, and a part of the extended other side of the support portion 700 may be located so as to be inserted into the incision portion formed in the side surface of the extension portion 420.

Since a part of the support portion 700 is inserted into the incision portion formed in the sides of the extension 420, the extension 420 may be prevented from falling downwardly of the cam plate 230.

The position measurement sensor 300B is provided at the side surface thereof with a separate stopper 520 fixed to the support shaft 500, whereby the position measurement sensor 300B is prevented from direct contact with an upper surface of the extension portion 420.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

10: Crimping apparatus
100: Upper body
110: Crimping pressing portion
115: Roller
115A: Moving roller
115B: Pressing roller
117: Measurement dog
120: Battery cell fixing unit
125: Fixing jaw
200: Cam
210: Cam support portion
220: Central support portion
230, 230A: Cam plates
231: Through-hole
300, 300A, 300B: Position measurement sensors
400: Measurement unit
410: Tight contact portion
420: Extension portion
500: Support shaft
520: Stopper
600: Movement guide portion
700: Support portion
C: Cylindrical battery cell
D: Distance from position measurement sensor to upper surface of extension portion

## Claims

1. A crimping apparatus for cylindrical batteries, comprising:
an upper body comprising a crimping pressing portion; and
a cam on which the upper body is disposed in plural in a circular shape, the cam being configured to rotate together with the upper bodies, wherein
the crimping apparatus comprises a position measurement sensor configured to measure a height of the crimping pressing portion.

2. The crimping apparatus according to claim 1, wherein the upper body further comprises a battery cell fixing unit disposed in the upper body, the battery cell fixing unit being configured to fix a cylindrical battery cell, and
wherein the crimping pressing portion is configured to move downward from above and to press the cylindrical battery cell such that a crimping portion is formed at the cylindrical battery cell after the cylindrical battery cell is fixed by the battery cell fixing unit.

3. The crimping apparatus according to claim 2, wherein the battery cell fixing unit comprises a fixing jaw configured to fix a beading portion of the cylindrical battery cell.

4. The crimping apparatus according to claim 1, wherein
a roller is disposed on the crimping pressing portion, and
the position measurement sensor measures a position of the roller.

5. The crimping apparatus according to claim 4, wherein
a measurement dog for position measurement is added to a central axis of the roller, and
the position measurement sensor measures a height of the measurement dog.

6. The crimping apparatus according to claim 4, comprising:
a cam plate located above the cam, a height of the cam plate being fixed, the cam plate including a through-hole; and
a measurement unit located through the through-hole, a position of the measurement unit being measured by the position measurement sensor.

7. The crimping apparatus according to claim 6, wherein the measurement unit comprises:
a tight contact portion in tight contact with the roller; and
an extension portion having one side connected to the tight contact portion and the other side extending upwardly of the cam plate through the through-hole.

8. The crimping apparatus according to claim 6, wherein the cam plate is provided at an upper surface thereof with a support shaft configured to support the position measurement sensor.

9. The crimping apparatus according to claim 7, wherein the extension portion is provided at a side surface thereof with a movement guide portion configured to guide movement of the measurement unit.

10. The crimping apparatus according to claim 6, wherein the position measurement sensor is an eddy current sensor.

11. The crimping apparatus according to claim 7, wherein the position measurement sensor measures a distance from the position measurement sensor to an upper surface of the extension portion.

12. The crimping apparatus according to claim 10, comprising a support portion fixed to a side surface of the extension portion, the support portion being configured to support the extension portion such that the extension portion is prevented from falling downwardly of the cam plate.
